**Europäisches Patentamt**

**European Patent Office**

**Office européen des brevets**

(19)

(11) **EP 1 154 588 A1**

(12) ## EUROPEAN PATENT APPLICATION

| | |
|---|---|
| (43) Date of publication:<br>**14.11.2001 Bulletin 2001/46** | (51) Int Cl.⁷: $H04B\ 7/005$, $H04B\ 7/26$ |

(21) Application number: **01460014.2**

(22) Date of filing: **22.02.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Belaiche, Vincent Antoine Victor**<br>**34280 La Grande Motte (FR)** |
| (30) Priority: **28.02.2000 FR 0002500** | (74) Representative: **Ballot, Paul**<br>**Cabinet Ballot,**<br>**4 Rue Général Hoche**<br>**56100 Lorient (FR)** |
| (71) Applicant: **Mitsubishi Electric Telecom Europe (S.A.)**<br>**92741 Nanterre Cedex (FR)** | |

(54) **Method for matching transport channels within a composite channel, corresponding device and base station**

(57) The subject of this invention is a method for matching transport channels included within a composite channel. Each transport channel transmits at least one data symbol (s). According to the invention, each symbol (s) to be transmitted is amplified by a gain (Gi) specific to the transport channel (i) from which said symbol (s) originates, in order to balance the Eb/I ratios between the different transport channels on the composite channel.

Field of application: third generation telecommunication systems for mobiles.

FIG.7

EP 1 154 588 A1

## Description

This invention relates to a method for matching at least two transport channels included within a composite channel. The main application of this invention is in the field of third generation telecommunication systems for mobiles.

The 3GPP (3rd Generation Partnership Project) committee is a standardization organization, with the purpose of standardizing a third generation telecommunication system for mobiles. The technique selected for this system is the CDMA (Code Division Multiple Access) technique. One of the basic aspects distinguishing third generation systems from second generation systems, apart from the fact that they use the radio spectrum more efficiently, is that they provide very good service flexibility.

In the ISO (International Standardization Organization) OSI (Open System Interconnection) model, a telecommunication equipment is modeled by a layered model forming a stack of protocols in which each layer is a protocol providing a service to the layer immediately above it. The service provided by the level 1 layer is called "transport channels". Therefore a transport channel can be understood as a data stream between the level 1 layer and the level 2 layer in the same equipment. A transport channel (TrCH for short) enables the level 2 layer to transmit data with a given service quality. This service quality depends on the channel coding and channel interleaving used. A transport channel can also be understood as a data stream between two level 2 layers in two separate items of equipment connected through a radio link.

Several transport channels may be multiplexed together in order to form a composite channel that can be transmitted on one or several physical channels. The number $I$ of transport channels included within a single composite channel is specific to this composite channel, and transport channels in this composite channel are numbered by an index i varying from 1 to $I$.

Each transport channel provides a service quality specific to it. This service quality is specified particularly in terms of the maximum binary error rate and/or the processing time. A ratio, Eb/I, is usually defined in order to evaluate reception conditions under which channel coding can give a given binary error rate, and is equal to the ratio between the average energy per coded bit and the average energy of the interference. The binary error rate at the channel decoder output is lower when this ratio at the channel decoder input is higher, but on the other hand the emission in the transport channel generates more interference. Thus, a matching operation is usually carried out on transport channels in order to limit the quantity of interference produced which directly influences the capacity of a CDMA type system; the purpose of this operation is to provide each transport channel only with the energy that it needs to provide its service quality.

The following describes the known technique for the treatment of data in the downlink (network to mobile station) in a system recommended by the 3GPP committee with reference to figures 1 to 4. In particular it describes the mechanism for matching the transport channels.

FIG.1 diagrammatically shows the chain used to generate a composite channel in a downlink.

FIG.2 is a block diagram illustrating the spread spectrum modulation steps performed by the chain used to generate a composite channel as defined in FIG.1.

FIG.3 diagrammatically shows a step for putting symbols into line format.

FIG.4 diagrammatically shows an RF modulation step.

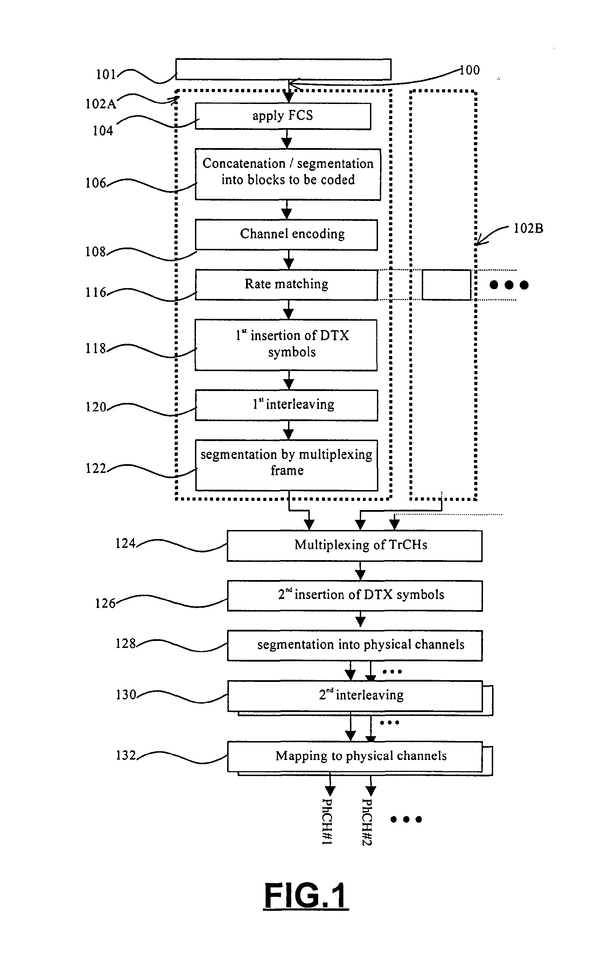

The transmission chain for the downlink in a third generation telecommunication system as defined by the 3GPP committee is shown in FIG.1.

For each transport channel referenced 100, the level 2 layer referenced 101 supplies a transport block set to the level 1 layer at periodic intervals, with a duration specific to the transport channel. This periodic interval is called the transmission time interval or TTI interval.

The duration of the TTI intervals is a multiple of 10 msec that corresponds to the duration of a radio frame. Radio frames are numbered time intervals synchronized by a signal broadcast by the network.

The number and size of transport blocks within a transport block set are defined by a piece of information called the transport format (TF). Each transport channel has a finite transport formats set (TFS) that is specific to it. For each radio frame, a transport format combination (TFC) can be defined as the list of transport formats for each transport channel during the radio frame considered. The composite channel has a finite transport format combination set (TFCS for short).

Transport channels with different service qualities are processed by separate processing chains (102A, 102B). A frame check sequence FCS is attached to each transport block during a step referenced 104. These FCS sequences are used in reception to detect if the received transport block is correct or corrupted. Note that the size of the FCS sequence may be zero when there is no need for error detection. The next step referenced 106 consists of forming a set of blocks to be coded starting from the set of transport blocks with their respective FCS sequences. Typically, this step 106 consisting of concatenation/segmentation into blocks to be coded consists of concatenating the transport blocks and their FCS sequences in series in order to form a single data block. This single block forms a block to be coded when its size is below a certain limit fixed by the channel coding type used, otherwise this single block is segmented into a set of blocks to be coded with similar sizes such that the size of each block does not exceed the maximum size imposed by the next channel encoding operation. The next step referenced 108 consists of channel encoding the blocks to be coded. The result at the end of this step is a coded block at each TTI interval. Typically, each block to be coded in a set is coded separately, and the resulting blocks are concatenated together in order to form a single coded block. Therefore, a coded block corresponds to a transport block set. Note that if the transport block set is empty, then by definition the size of the coded block is zero. In the same way as a sequence of transport block sets forms a transport channel, a sequence of coded transport blocks is called a coded transport channel.

In the downlink shown in FIG.1, the first step 116 is to match the rate of the coded transport channel.

Rate matching is necessary since in a system using the CDMA technology, the capacity of the system is limited by interference. With this technology, several physical channels can use the same carrier frequency. Therefore they interfere directly with each other. Therefore, in order to reduce interference applied to each physical channel, the power of each of the other physical channels needs to be minimized.

Furthermore, transport channels within a single composite channel do not necessarily have the same needs in terms of the Eb/I ratio, where Eb denotes the average energy per coded bit (per bit after the channel encoding step 108) and I is the average energy of the interference. In the rest of this description, the matching of the Eb/I ratios between the different transport channels is referred to as matching of transport channels. The known technology for matching transport channels is rate matching; coded symbols on one transport channel may either be repeated or punctured (in other words deleted) depending on whether the Eb/I ratio needs to be increased or reduced for this transport channel. Without this transport channel matching operation, all transport channels would have the same Eb/I ratio in reception, which would then be fixed by the most demanding transport channel. Thus, the quality of the signal received by all other transport channels that are less demanding in terms of service quality would be "too high", which would unnecessarily increase interference and would affect the system capacity. The ratio of the number of symbols after rate matching to the number of symbols before rate matching is approximately equal to a rate matching ratio $RF_i$. In reception, the Eb/I ratio is increased or attenuated depending on whether or not the $RF_i$ ratio during the inverse rate matching operation is greater than or less than 1.

For each transport channel, the rate matching ratio $RF_i$ is proportional to a rate matching attribute $RM_i$ specific to said transport channel, according to a factor LF independent of this transport channel.

$$RF_i = LF.RM_i$$

Thus, the proportions between the different rate matching attributes are approximately equal to the proportions between the Eb/I ratios required before channel decoding.

DTX symbols may be inserted in the next step reference 118. This insertion step 118 is carried out only when the receiver blindly detects the transport channel rate. The rate at the end of the step 118, counting data symbols and DTX symbols, is then constant. A DTX symbol is a symbol to which is assigned a value $\delta$ distinct from possible values for data symbols, and which is transmitted at zero energy at the time that it is put on a physical channel. A DTX symbol is actually a discontinuous emission indicator and does not carry any information individually. In reception, DTX symbols are not processed in the same way as data symbols in that a transport format detection operation is used to determine their positions in the received blocks and to remove them.

The symbols thus obtained are then interleaved in a first interleaving step 120.

In a next step referenced 122, a segmentation per multiplexing frame is carried out. All steps prior to this segmentation step 122 are carried out on a TTI interval basis. Note that the different transport channels in the composite channel may have different TTI interval durations. Therefore, a common period should be considered which is equal to the radio frame to carry out the next step reference 124 that applies to all transport channels. Thus, for any transport channel $i$ for which the duration of the TTI interval is equal to $F_i$ radio frames, the data blocks are segmented into $F_i$ segments, each of which is associated with a radio frame for this TTI interval. All steps before the segmentation step 122 are then carried out on a radio frame basis. The different transport channels after coding, segmentation, interleaving and rate matching are multiplexed to each other in a step 124 in order to form a composite channel. This multiplexing step 124 periodically produces a data block called the multiplexing frame. The period at which multiplexing frames are produced corresponds to the duration of a radio frame. The sequence of multiplexing frames forms the composite channel.

The multiplexing done in step 124 is a simple concatenation of blocks originating from each transport channel. When the receiver does not blindly detect any rate in transport channels, the DTX symbols are not inserted in step 118, but are inserted after multiplexing in a step 126. This enables a transport channel to use the resource in codes not used by another transport channel for which the rate is not maximum. Since the capacity of a physical channel is limited, it is possible that the number of physical channels necessary to transport this composite channel is greater than 1. In this case, a step 128 is carried out in which this composite channel is segmented into physical channels. For example in the case of two physical channels, this segmentation step 128 consists of sending the first half of the symbols to a first physical channel and the second half of the symbols to the second physical channel.

The data segments obtained are then interleaved in a step 130 and are then mapped to the corresponding physical channel in a step 132. This final step consists in spread spectrum modulating the symbols.

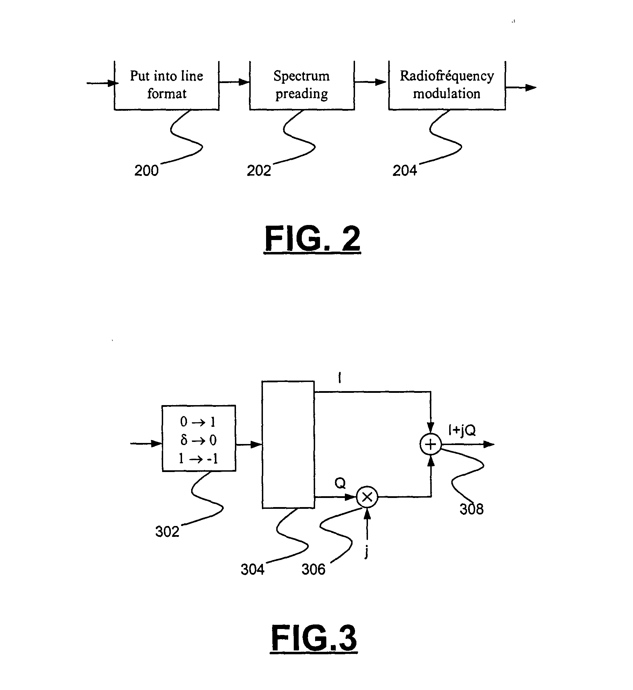

As shown in FIG.2, spread spectrum modulation may be modeled as a sequence of three steps. A first step referenced 200 called the step for putting symbols into line format, consists of converting a series of digital symbols into a signal to be spread. This signal to be spread is composed of a series of samples. In this document, a distinction is made between symbols and samples. A symbol is assigned a value in a finite set called an alphabet. For example, the set {0,1, ..., N-1} forms an alphabet containing N elements. Therefore, a symbol is an information element. A sample has a value in the set of real numbers R if it is a sample with a real value, or in the set of complex numbers C if it is a complex sample. The value of a sample represents a physical magnitude of a signal transmitted at a precise and periodic instant. Therefore in reception, the samples may have a large number of values due to interference added to them, whereas in emission their values are typically only within a finite part of R or C, called a constellation. For example, for a binary modulation, the constellation may be {+1, -1}. The value of this sample is called the amplitude of a sample. By extension, the amplitude of a symbol is the amplitude of the sample into which this symbol was converted at a specific step in the transmission chain. The modulus |x| of an amplitude x is called the amplitude modulus.

FIG.3 shows the step for putting symbols into line format for the case of the system recommended by the 3GPP committee. The digital symbols to be put into line format may be data symbols that consist of bits (0 or 1), or DTX symbols represented by the letter $\delta$. This step converts a pair of consecutive symbols to be put in sequence into a sample with a complex value in the set {-1+j, j, 1+j, -1, 0, +1, -1-j, -j, 1-j}. During a first step referenced 302, a digital symbol 0, $\delta$ or 1 is converted into a sample with a real amplitude equal to +1, 0 or -1 respectively. During a second step referenced 304, consecutive samples are placed on separate branches denoted I and Q respectively in the figure in a series/parallel conversion. Due to this conversion, the rate on each of the two branches is equal to one half of the rate on the input side of the conversion. Each sample on the lower branch Q is multiplied by j at a step reference 306, where j and -j are defined as the square root of -1 ($j = \sqrt{-1}$). In a next step referenced 308, the samples of each branch are added in order to form samples with complex amplitudes, and the series of these samples forms the signal for which spectrum spreading is required.

With reference to FIG.2 again, the next step referenced 202 consists of carrying out spectrum spreading. It consists of multiplying the signal to be spread output from the previous step 200 by a pseudo noise signal. This type of pseudo noise signal is the result of the product of a spreading code and a "scrambling" code. In the system recommended by the 3GPP committee, the spreading code is a real value chosen from the (+1, -1) set and the scrambling code is a complex value chosen from the (1+j, -1+j, -1-j, 1-j) set.

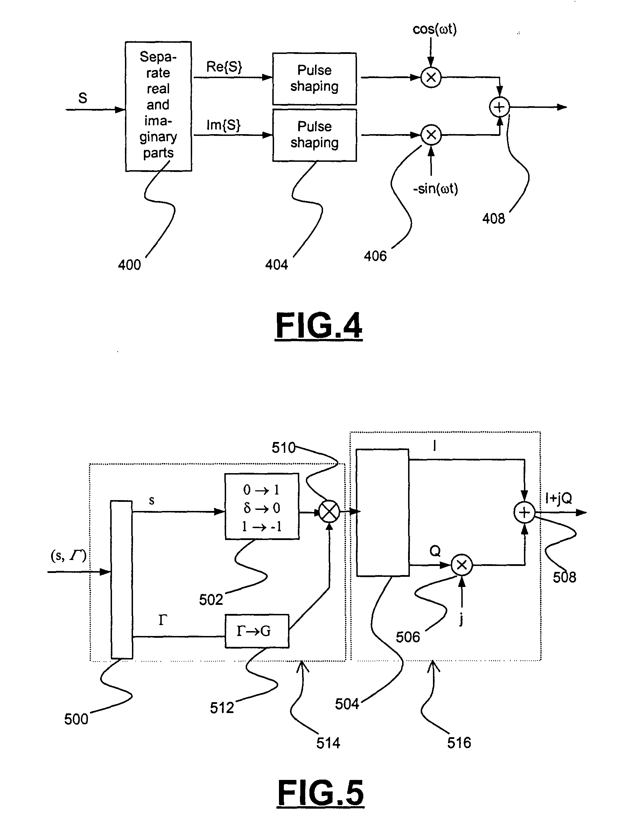

Finally, a radiofrequency modulation step referenced 204 is carried out on the spread signal. This step is shown in detail in FIG.4. In a first step reference 400, the real and imaginary parts of the spread spectrum signal are separated. They are then input into the pulse shaping filters 402. This filtering is necessary since if it is not done, samples forming the spread signal would be transmitted in the form of typically rectangular pulses, yet rectangular pulses cause excessive interference on adjacent bands. In the system recommended by the 3GPP committee, the pulse shaping operation consists of replacing rectangular pulses by pulses with a spectrum with a Raised Root Cosine (RRC). At the end of the modulation, the filtered signals are applied to a radiofrequency carrier during a step reference 406, in order to form radiofrequency signals in phase and in phase quadrature. These radiofrequency signals carrying the real and imaginary parts respectively, are then combined during a step referenced 408. Typically, digital signals with discrete times are converted into analog signals with continuous times at the end of the pulse shaping step.

As described above, the capacity of a system using the CDMA technology is limited by interference and matching of transport channels reduces interference by assigning only the value of the Eb/I ratio necessary to each transport channel. The known technology for matching transport channels is rate matching carried out in step 116.

However, the problem of a shortage of spreading codes arises in the downlink. Codes that are orthogonal to each other are used in the downlink to spread the spectrum of each user's signals. Orthogonality is necessary since when several signals spread by codes in orthogonal pairs are combined in a transmitting station, orthogonality facilitates their separation in a receiving station.

Orthogonal codes, conventionally referred to by the term OVSF (Orthogonal Variable Spreading Factor) can be classified according to a tree structure in which the spreading factor is multiplied by two at each node along any paths of the tree starting from the root and running towards any branch of the tree. This spreading factor is equal to 1 at the root of the tree. This tree defines an orthogonality relation between codes such that two codes are orthogonal if neither of them is the ancestor of the other in the tree. The bit rate that can be transmitted using a given spreading code is inversely proportional to the spreading factor for this code. Thus, the resource in codes available to a composite channel is a number that is typically proportional to the sum of the products of the inverse of the spreading factor of each code used by the time proportion during which the corresponding code can be used. The code resource used by the composite channel is a fraction of the available code resource that would be sufficient to transmit the composite channel under a certain condition that tends to minimize this fraction.

Since the number of OVSF codes is limited and since observance of orthogonality further limits their use, there is a problem of a shortage of spreading codes for the downlink.

The known technique for matching transport channels by rate matching has the disadvantage that it exacerbates the problem of the shortage of spreading codes. For example, consider a composite channel comprising two transport channels indexed 1 and 2 such that:

- transport channel 1 may be punctured by a maximum of 20% (in other words 1 symbol in 5 is deleted), and
- transport channel 2 may be punctured to a maximum of 10%,

and that the transport channel 1 requires an Eb/I ratio twice greater than the transport channel 2.

The code resource required by the composite channel is minimum if the two transport channels 1 and 2 are both punctured to the maximum, in other words with rates of 20% and 10% respectively. However in this case, the Eb/I ratio of transport channel 1 is equal to $0.8/0.9 \approx 0.89$ times the value for transport channel 2. Thus, the two transport channels are not matched and therefore the power to be transmitted is greater than necessary. In order to minimize the code resource required by the composite channel while matching the two transport channels, transport channel 2 would need to be punctured by 10% and transport channel 1 would need to be repeated by 80%; transport channel 1 would then have an Eb/I ratio equal to $1.8/0.9$ = twice greater than the ratio for transport channel 2, which is what is required. Suppose that the transport channels 1 and 2 had the same rate D after channel coding. It would then be found that the necessary code resource when rate matching is done is equal to $(1.8D + 0.9D)/(0.8D + 0.9D) \approx 1.59$ times greater than if there were no rate matching, transport channels being punctured to the maximum in both cases. The effect is further amplified if the transport channel 1 has a rate 2D after channel coding twice greater than the rate D in transport channel 2, since the code resource necessary is then $(1.8 \times 2D + 0.9 \times D)/(0.8 \times 2D + 0.9 \times D) = 1.8$ times greater than if there were no rate matching. Therefore it is found that rate matching accentuates the problem of a shortage of spreading codes.

One purpose of the invention is to propose a method for matching transport channels that does not aggravate this problem of a shortage of spreading codes in the downlink.

Another purpose of the invention is to propose a method for matching transport channels within a composite channel in order to generate a radiation diagram specific to each transport channel.

A subject of the invention is a method for matching at least two transport channels within a composite channel, each of said at least two transport channels transmitting at least one data symbol, characterized in that it comprises a step in which the amplitude of each data symbol to be transmitted is amplified by a gain specific to the transport channel from which said data symbol originates. This matching method modifies the value of the Eb/I ratio of each of said transport channels without increasing the number of spreading codes necessary to spread the spectrum of each user.

The gain specific to each of said at least two transport channels is assumed to be constant over a period corresponding to the common period with which said at least two transport channels are grouped to form said composite channel.

In the simplest embodiment, this gain is a real positive number. In a more sophisticated embodiment, this gain is a vector that, in particular, represents a radiation direction and is equal to the product of a real positive number and a normalized vector. In this embodiment, the gain can then be used to associate a particular radiation diagram with each transport channel.

Another subject of the invention is a device for matching at least two transport channels included within a composite channel, each of said at least two transport channels transmitting at least one data symbol, characterized in that it comprises means for amplifying the amplitude of each data symbol to be transmitted by a gain specific to the transport channel from which said data symbol originates. This device is intended to be placed in a base station of a telecommunication system.

Finally, another subject of the invention is a device for generation of a composite channel comprising at least two transport channels, said generation device comprising means for encoding data symbols for each of said at least two transport channels, means for multiplexing said at least two transport channels to form said composite channel and means for transmitting said composite channel on at least one physical channel, characterized in that it also comprises a device for matching said at least two transport channels as described above. This device is also designed to be placed in a base station of a telecommunication system.

The invention will be better understood after reading the following detailed description given solely as an example, and with regard to the attached figures. The figures show:

FIG.5 is a diagrammatic representation of step for putting symbols into line format according to the invention;

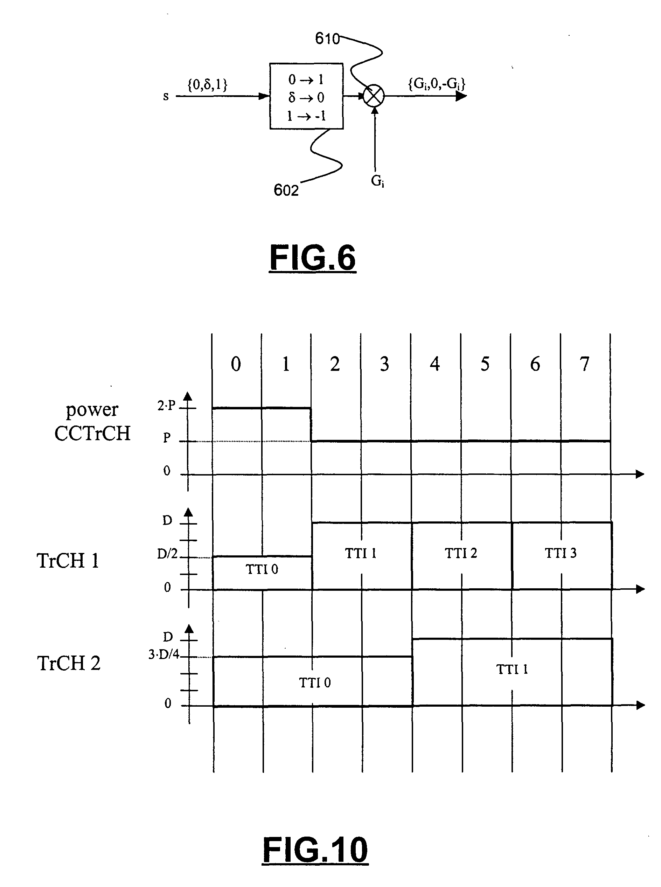

FIG.6 is a diagrammatic representation of a symbol amplification step according to one variant embodiment of the invention;

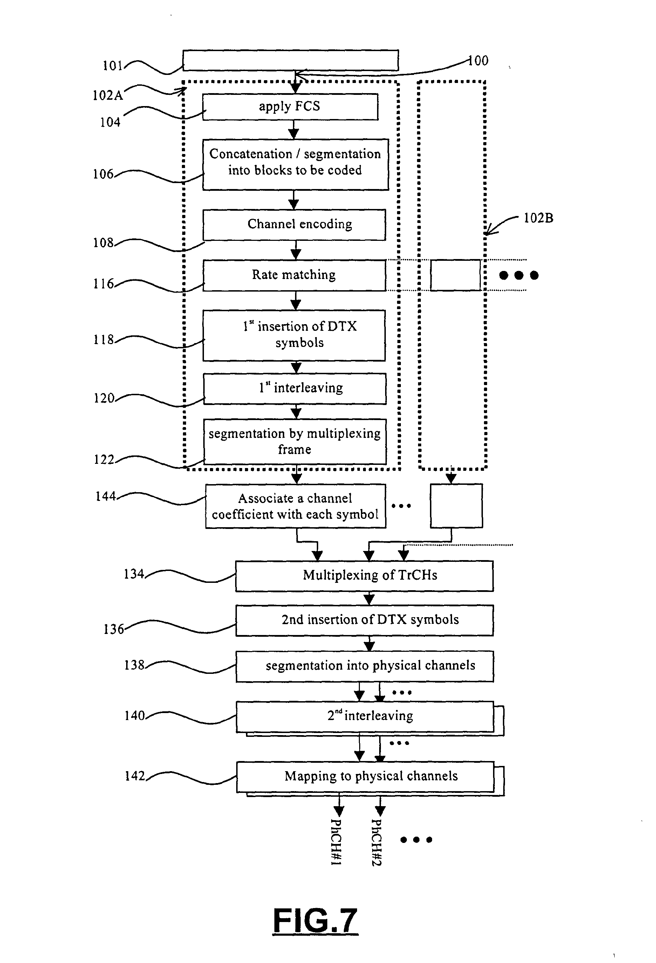

FIG.7 is a diagrammatic representation of the composite channel generation chain in the downlink according to the invention;

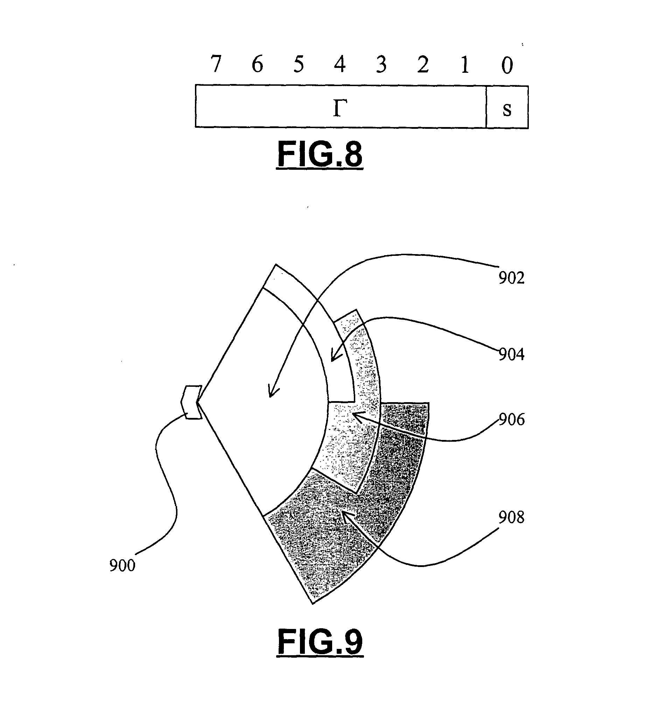

FIG.8 is an example of the data format to memorize and manipulate a (*s*, Γ) pair composed of a symbol and a channel coefficient;

FIG.9 is a diagrammatic view of different radiation diagrams produced by the same antenna; and

FIG.10 is a set of time diagrams illustrating the emitted power and the raw bit rate from a composite channel on one or several physical channels when said composite channel is transmitted in compressed mode and in normal mode.

With reference to FIG.7 and FIG.1 to be compared, according the invention, step 132 is replaced by a similar step 142. A coefficient $\Gamma_i$ that depends on the transport channel *i* from which the symbol originates, is associated with each data symbol supplied to step 142. By convention, the coefficient associated with the DTX symbols is denoted $\Gamma_0$, regardless of which transport channel is used. For example, $\Gamma_i$ may be equal to *i* for all values of *i* from *0* to *I*. Throughout the rest of this description, this coefficient is called the channel coefficient. The symbol s and its channel coefficient Γ are concatenated to form an (s, Γ) pair.

FIG.8 shows an example of a data format for the (s, Γ) pairs. In this data format, the (s, Γ) pair is stored within a data element, for example included within a byte. This byte comprises two fields, a first field composed for example of the least significant bit 0 in the byte, and a second field composed for example of the 7 most significant bits 1 to 7. When s is a symbol (0 or 1), the value of this symbol is stored in the first field, and the value of the associated channel coefficient Γ (from 1 to 127) is stored in the second field. When s is a DTX symbol ($\delta$), all bits in the byte are zero.

Furthermore according to the invention, step 200 for putting symbols into line format in the spread spectrum modulation is modified as illustrated in FIG.5 described below. During this step, the (s, Γ) pair formed above is retransformed firstly into a digital symbol s, and secondly into a channel coefficient Γ in a step 500. The channel coefficient Γ is then converted into a gain G specific to the transport channel in a step 512. For data symbols, this gain is a positive non-zero number. Thus, the rectangular pulse with a complex amplitude in the {-1+j, j, 1+j,-1, 0, +1, -1-j, -j, 1-j} set derived from the conversion of the digital symbol s during step 502 is multiplied by the gain G in a step reference 510. By convention, the gain G corresponding to $\Gamma_0$ is zero. The step 502 is identical to step 302 according to the state of the art. Steps 504, 506 and 508 are identical to steps 304, 306 and 308 respectively, except that the range of the samples processed is greater.

Remember that for each transport channel *i*, the corresponding rate matching ratio is denoted $RF_i$, which is the ratio of the number of symbols per block after rate matching to the corresponding number of symbols per block before rate matching. Furthermore, the gain corresponding to each transport channel *i* is denoted $G_i$. As already mentioned, $G_0 = 0$ for DTX symbols. Thus, considering the signal to interference ratio (SIR) in reception, the Eb/I ratio corresponding to the transport channel i is equal to:

$$Eb/I = K. \frac{RF^2_i \cdot G^2_i}{RF_i} .SIR = K. RF_i. G_i^2 .SIR$$

where K is a constant that is independent of the transport channel. In the formula shown above, it may be assumed that the SIR ratio is calculated with reference symbols such as pilot symbols that do not form part of the composite channel. The constant K can then be understood as being a power gain with respect to the pilot symbols, this gain K being applied to the entire composite channel in addition to the power gains $G_i^2$ specific to each transport channel.

The gain $G_i$ may be expressed as a gain with respect to a reference amplitude modulus common to all symbols, for example equal to the amplitude modulus of the pilot symbols when K = 1. Furthermore, in order to match transport channels, the proportions between the values of gains associated with transport channels is considered, rather than the proportions between their absolute values. The amplitude of the entire composite channel can be amplified or attenuated independently for each transport channel during the radiofrequency modulation.

Therefore, according to the invention, the transport channels can be matched both by rate matching ($RF_i$) and by applying gains of transport channels ($G_i$). For the rate matching step, the rate matching attributes $RM_i$ to be used are then determined taking account of the required Eb/i ratio and the gain $G_i$.

Considering the step in which a channel coefficient Γ is assigned with each symbol, this association may be made at several levels within the chain for generation of a downlink composite channel. In a preferred embodiment shown in FIG.7, the coefficient Γ is associated with each symbol during a step reference 144 at the end of the processing chain (102A, 102B) of each transport channel. For example, for the processing chain 102A, $\Gamma_i$ is associated with all data symbols (0 or 1) whereas $\Gamma_0$ is associated with DTX symbols ($\delta$) inserted in step 118. More generally, a coefficient $\Gamma_i$ is associated with all data symbols (0 or 1) in transport channel i, and the $\Gamma_o$ coefficient is associated with all DTX symbols ($\delta$) included in the same transport channel, during step 144.

The next steps 134, 138 and 140 in FIG.7 are similar to steps 124, 128 and 130 in FIG.1. Steps 124, 128 and 130 carry out operations on sets acting only on the order of the symbols and not on the symbols themselves. Thus, the only difference between steps 134, 138 and 140 and steps 124, 128 and 130 is that steps 134, 138 and 140 consist of carrying out operations on $(s, \Gamma)$ pairs and not on symbols. Similarly, the second DTX symbol insertion step 136 is different from the step 126 according to standard practice in that the $(\delta, \Gamma_0)$ pair is inserted instead of the DTX symbol $\delta$.

According to a first variant embodiment, the association step 144 is carried out at any level between the channel encoding step 108 and the transport channel multiplexing step 134. All operations carried out between these two steps are operations on sets or insertions of DTX symbols. Consequently, they can equally well be carried out on pairs as on symbols alone.

According to a second variant embodiment, the step in which a channel coefficient is associated with each symbol in a transport channel is carried out within the composite channel generation chain, at any level between the step 134 in which transport channels are multiplexed and the step 142 in which transport blocks are mapped to physical channels. Typically, the original transport channel for each symbol in a transport block transiting at a given level between steps 134 and 142 may be determined as a function of the current combination of transport formats and the position of the symbol within the transport block considered. Therefore, all that is necessary to determine the channel coefficient to be associated with each symbol is to use a lookup table with one element for each transport format combination, this element then pointing to a table indicating the channel coefficient to be associated with each position in the block.

A third variant embodiment deals more particularly with the case of a composite channel comprising transport channels for which the same transmission antenna radiation diagram is not required. This may be the case for a composite channel comprising common transport channels (in opposition to dedicated transport channels). For example, the FACH (Forward Access Channel) channel and the PCH (Paging Channel) channel are typically two common transport channels that can cohabit within the same composite channel. The FACH channel can be used to transmit data by packets in the downlink when the data rate is low. Thus, a measurement made on the uplink can be used to locate the angular position of the mobile station and to transmit the FACH channel with a directional radiation in the direction of the mobile station concerned. Furthermore, the PCH channel is used particularly to request a disconnected mobile station to access the network. Thus, the PCH channel cannot be transmitted directionally since the network does not have any measurement about the angular position of the mobile station, because the mobile station has not transmitted any signal previously on the uplink.

In this third variant embodiment, it is possible to transmit two transport channels included within a single composite channel, with different radiation diagrams.

This is done using a known type of directional antenna in which the radiation diagram can be modified dynamically. This antenna comprises a set of nondirectional elementary antennas. The same signal is supplied to each elementary antenna with a phase shift specific to it, such that the signals transmitted by each elementary antenna combine destructively in some directions and constructively in other directions. Thus, the signal supplied to the antenna may be written as a vector as a function of time, this vector being an element of a vector space that depends on the antenna considered, referred below as the antenna space. The antenna space is a vector space with a finite dimension, in which the base field is C, the field of complex numbers. The elements of this base field are called "scalars". The vector representing the signal output to the antenna is a linear combination with complex coefficients of a base in the antenna space. These coefficients are the coordinates of the representative vector in the base in the antenna space. For example, this base comprises one vector for each elementary antenna, each coordinate assigned to this base vector giving a gain and a phase shift affecting the signal output to this elementary antenna. Suppose that the directional antenna thus comprises $L$ elementary antennas numbered from 1 to $L$, there is then a base $\vec{\varphi}_1, \vec{\varphi}_1, ... \vec{\varphi}_L$ in which each vector corresponds to a normalized signal transmitted on a single elementary antenna. This base is then called the canonic base.

If $S(t)$ is the complex amplitude of the nondirectional signal, then all that is necessary to direct the signal in a given direction is to multiply $S(t)$ by a vector $\vec{G} = g_1 \cdot \vec{\varphi}_1 + g_2 \cdot \vec{\varphi}_2 + \cdots + g_L \cdot \vec{\varphi}_L$ in the antenna space putting $S(t)$ into the required direction. A vector $S(t) \cdot \vec{G}$ is then supplied to the antenna at each instant. In other words, a signal $g_n \cdot S(t)$ is supplied to elementary antenna number n.

Within the framework of the invention, all that is necessary to assign a specific radiation direction to each transport channel within the same composite channel is to modify steps 504, 506, 508, 510 and 512 in FIG.5. These modified steps are hereinafter denoted 504', 506', 508', 510' and 512', respectively. In step 512', the channel coefficient $\Gamma$ is converted into a vector $\vec{G} = G \cdot \vec{\Phi}$ in the antenna space, giving firstly a direction $\vec{\Phi}$ specific to the transport channel ($\vec{\Phi}$ is normalized such that the power per unit area in the direction of maximum radiation is equal to a constant reference power per unit area), and secondly, a gain G (G $\geq$ 0) specific to the transport channel. Step 510' consists of multiplying the vector G in the antenna space by the scalar output from the prior step 502 (this number is actually real and consequently forms part of C). Step 504' is a series/parallel conversion. Unlike step 504, it operates on vectors in the antenna space. Step 506' consists of multiplying a vector in the antenna space by the scalar $j$ and step 508' consists of adding vectors output from branches I and Q. A simplified base can be used using less vectors than the canonic base $\vec{\varphi}_1, \vec{\varphi}_1, ..., \vec{\varphi}_L$ to represent the different samples processed by the step for putting into line format. Typically, the canonic base comprises about ten vectors. For example, FIG.9 diagrammatically shows the radiation diagrams of different signals emitted by the same antenna 900. It is assumed that the cell covered by the antenna 900 is a 120° sector. The radiation diagram reference 902 also corresponds to an isotropic coverage of the cell. It typically corresponds to the radiation diagram necessary for the PCH transport channel. Furthermore, the radiation diagrams referenced 904, 906 and 908 correspond to three possible radiation directions for the FACH transport channel. Assume that the radiation diagrams reference 902, 904, 906 and 908 correspond to normalized vectors $\vec{\Phi}_0, \vec{\Phi}_1, \vec{\Phi}_2$, and $\vec{\Phi}_3$ respectively, chosen to form the simplified base. Suppose also that it is required to obtain the four radiation diagrams 902, 904, 906 or 908 for the transport channels. In this case it is sufficient to represent the vector G as a list of four real numbers corresponding to the coordinates of this vector in the simplified base $\vec{\Phi}_0, \vec{\Phi}_1, \vec{\Phi}_2, \vec{\Phi}_3$, for instance $(G,0,0,0)$, $(0,G,0,0)$, $(0,0,G,0)$ and $(0,0,0,G)$ when the 902, 904, 906 and 908 radiation diagram are required respectively. Each of the lists is treated as a sample. A list (from 512') is multiplied by a number (from 502) in step 510'. This step 510' is carried out by multiplying each element in the list by this number. Similarly, each element in the list is multiplied by j in step 506'. The sum in step 508 is calculated by adding the corresponding elements in the lists output from the I and Q branches.

In particular, note that complex numbers are treated as lists of two real numbers.

Otherwise, when there are two complex numbers $\alpha$ and $\beta$ such that $\vec{\Phi}_0 = \alpha.\vec{\Phi}_1 + \beta.\vec{\Phi}_2 + \alpha.\vec{\Phi}_3$, all that is necessary is to manipulate lists of three complex elements, since G can then be represented by $(G.\alpha,\ G.\beta,\ G.\alpha)$, $(G,0,0)$, $(0,G,0)$, or $(0,0,G)$ respectively, when the direction of the required radiation diagram is $\vec{\Phi}_0, \vec{\Phi}_1, \vec{\Phi}_2$ or $\vec{\Phi}_3$. Thus, the simplified base comprises only the vectors $\vec{\Phi}_1, \vec{\Phi}_2$ and $\vec{\Phi}_3$.

A fourth variant embodiment is described below. In this variant, the step 200 for putting symbols into line format operates differently. Steps 500, 502, 510 and 512 form a first group of steps denoted 514 and called the putting into real line format group in the following, and steps 504, 506 and 508 form a second group of steps referenced 516, and called the real/complex conversion group in the following.

In this fourth embodiment, step 200 for putting symbols into line format only comprises the group of real/complex conversion steps 516, whereas the group 514 of putting into real line format steps is applied during the association step 144, immediately after the actual operation for associating a channel coefficient with each symbol.

In other words, in the fourth variant embodiment, step 144 is replaced by a step for amplifying the symbols represented in FIG.6. This step converts a 1, $\delta$ or 0 symbol into a sample with amplitude $-G_i$, 0 or $+G_i$,

respectively, for example by the following two steps in sequence:

- a first step reference 602 in which a 1, $\delta$ or 0 symbol is converted into a sample with a real amplitude of -1, 0, +1 respectively; this first step is similar to step 502;
- then a second step reference 610 in which the amplitude of the sample is multiplied by the gain $G_i$ specific to the transport channel i.

Steps 134, 136, 138 and 140 then operate on samples and not on (s, $\Gamma$) pairs. For example, these samples may be represented and memorized in the form of bytes $(b_7, b_6, b_5, b_4, b_3, b_2, b_1, b_0)$ where $b_k$ denotes the bit with weight k, one byte being assigned to each sample, and where the value of the sample is equal to

$$-b_7.128 + \sum_{i=0}^{i=6} b_i.2^i$$

and is between -128 and +127. This can thus give gains between 1 and 127 with a step value of one.

It can be understood that this fourth variant embodiment is easily combined with the second variant embodiment in which step 144 is placed in a different position. However, the fourth variant embodiment cannot easily be combined with the third. In this case, the gain is a vector $\vec{G}$ and not a simple real number. Consequently, the definition of the gain requires more information. Therefore, in order to limit the quantity of information manipulated by operations on sets (interleaving, segmentation, multiplexing, rate matching) or by steps in which DTX symbols are inserted, it is better to locate the $\Gamma \Rightarrow \vec{G}$ conversion as low as possible in the composite channel generation chain, in other words for example in the same position as step 512' in the third variant embodiment. Thus, none of the steps prior to step 142 for mapping to physical channels is affected. Consequently, by positioning the group of putting into real line format steps 514 as low as possible in the generation chain for a composite channel (in other words during the step 142 for putting on physical channels), the result is a modular architecture of the device according to the third variant embodiment. With this type of modularity, the current architecture of the device for the generation of a composite channel can be maintained without changing its upgradability. In particular, any required change can be made concerning the range and/or the granularity of specific gains associated with the different transport channels (in other words any change concerning the number of bits on which the corresponding gains $G_i$ are coded). This type of change only affects the last step in the chain generating the composite channel. Thus, implementation of the third variant embodiment of the composite channel generation device may be an option. If this option is chosen, all that is necessary is to change a module in the corresponding device, for example consisting of a single printed circuit board in a storage cabinet.

Furthermore, the time at which gains specific to the different transport channels is varied is easier to control, as described later.

Another advantage of the invention that is not valid for the fourth variant embodiment is that the gain G associated with each transport channel can be varied radio frame by radio frame. The step in which the channel coefficient is converted into gain, 512 or 512', is carried out during the step 142 for putting on physical channels, and therefore may be different in each radio frame. This is an additional advantage compared with rate matching 116 that is done before the step 122 for segmentation by multiplexing frames, and consequently is carried out TTI interval by TTI interval. Therefore with the method according to the invention, the matching of transport channels can be varied in each radio frame. This can be useful in the case of the system recommended by the 3GPP committee, as reception by mobile stations is continuous. In order for mobile stations to be able to make measurements, a transmission mode called compressed mode is used to create a silence period within a radio frame, or during a period overlapping two successive radio frames. If there is no compressed mode, it is said that normal mode is used. During the silence period, the network no longer transmits the composite channel and the mobile station can therefore make measurements without any loss of information, since the information to be transmitted is transmitted in a compressed manner during the rest of the time. The advantage of compressed mode is that the mobile station only needs one radiofrequency reception chain in order to make measurements and to receive the composite channel at once, since these two operations are not simultaneous.

Remember that in normal mode, the rate matching ratio $RF_i$ of each transport channel i is equal to the product of a rate matching attribute $RM_i$ specific to the transport channel and a scale factor LF common to all transport channels as expressed by the following equation:

$$\forall i \; RF_i = LF.RM_i$$

However, this relation is no longer true in one embodiment of compressed mode currently under study and proposed by the Nortel Networks company in technical document 3GPP/TSG RAN/WG1#10/Rl-00-0121. This implementation is illustrated through an example shown in FIG.10.

FIG.10 shows a composite channel (CCTrCH) composed of two transport channels denoted TrCH 1 and TrCH 2. For simplification purposes, it is assumed that the two transport channels have the same rate matching attribute. The top part of FIG.10 shows a time diagram of the transmission power of the CCTrCH, averaged by radio frame, and the bottom part contains two histograms showing the rate of transport channels TrCH 1 and TrCH 2 respectively. The duration of the TTI intervals for these two transport channels is 20 msec and 40 msec respectively. It is assumed that a silence period occupies a percentage 1-β of radio frames 0 and 1. In the example shown in the figure, β is equal to 0.5 and therefore the silence period occupies half of frames 0 and 1. Thus, in order to compensate for the fact that the emission time is shorter by a factor β (namely half as long in the case in which β equals 0.5), the transmission power of the composite channel CCTrCH is multiplied by a factor 1/β (multiplied by 2 in the figure) during frames 0 and 1, in other words it is equal to P/β (= 2.P in the figure), whereas it is equal to P for radio frames 2 to 7. In this very simple example, it is assumed that the radio channel is not attenuated in any way, and therefore that it is not necessary to vary the transmission power to compensate for variations in the attenuation of the radio channel. Thus, power variations are due to compressed mode only.

The TTI intervals are numbered starting from 0 in order to simplify the explanations; thus for every positive or zero integer k, the TTI interval number k of transport channel TrCH 1 covers radio frames 2·k to 2·k+1, and the TTI interval number k of transport channel TrCH 2 covers radio frames 4·k to 4·k+3.

The area of each bar in the histogram represents the number of symbols after rate matching, and therefore the height of the bar corresponds to the average rate per TTI interval after rate matching. As shown in the figure, it is assumed that the two transport channels have the same rate D after rate matching in normal mode. The transport channel TrCH 1 has a TTI interval of 20 msec. Thus, during radio frames 0 and 1, the transmission time is shorter by a factor β (namely half as long in the case in which β = 0.5). Therefore, puncturing should be done 1/β times more for TrCH 1 during radio frames 0 and 1 than during radio frames 2 to 7 in order to multiply the rate by β. Thus, the transport channel TrCH 1 has a rate β.D (= D/2 in the figure) during radio frames 0 and 1 affected by compressed mode, and a rate D during radio frames 2 to 7. For transport channel TrCH 2, the data transmission time corresponding to the TTI interval number 0 is only reduced by a factor (β+1)/2, since only half of the frames are affected by compressed mode. Thus, the rate on transport channel TrCH 2 is equal to $\frac{\beta+1}{2}.D$ (= 0.75xD in the figure) during radio frames 0 to 3, and D during radio frames 4 to 7.

We will now see how transport channels are matched. For transport channel TrCH 1, the number of symbols during frames 0 and 1 is reduced since it is multiplied by the factor β, but the power is increased since it is multiplied by the factor 1/β. Therefore, the Eb/I ratio for channel TrCH 1 is constant since the product of the two factors is equal to 1. For transport channel TrCH 2, the number of symbols during radio frames 0 to 3 is $\frac{\beta+1}{2}$ times greater than for radio frames 4 to 7. But on the other hand, the power is doubled for a percent $x = \frac{\beta}{\beta+1}$ ($\approx 33\%$ for the figure) of the symbols. According to the method proposed in document 3GPP/TSG RAN/WG1#10-00-0121, the number of symbols transmitted during radio frames 0 and 1 is equal to $\beta$ times the number of symbols transmitted during radio frames 3 and 4. The average power per symbol is then $x.2.P + (1-x).P \frac{1+2.\beta}{1+\beta}.P$. But $\frac{1+2.\beta}{1+\beta}$ is not the inverse of $\frac{\beta+1}{2}$. Thus in this proposal, the ratio Eb/I of the transport channel TrCH 2 changes during compressed mode. The result is that compressed mode causes an unmatch of this ratio.

Assuming that the proposal in document 3GPP/TSG RAN/WG1#10-00-0121 is selected, the inventive method can be used to restore the match between transport channels TrCH 1 and TrCH 2 by assigning gains $G_1 = 1$ and $G_2 = 1/2\beta$ to them during radio frames 0 and 1 respectively, and the same gains $G_1 = G_2 = 1$ during the rest of the time.

More generally, the invention makes it possible to use different rate matching attributes $RM_i$ and $RM_i^{cm}$ for normal mode and for compressed mode. Matching of transport channels can be maintained by the application of appropriate gains $G_i$ and $G_i^{cm}$ such that $RM_i . G_i^2 = RM_i^{cm} . G_i^{cm2}$. Thus in compressed mode, the puncturing limit for each transport channel may be made as similar as possible so that less code spreading resources are used than in normal mode, and so that the same spreading code resource can be used for normal mode and for compressed mode.

More generally, the "$\forall i\ RF_i = LF.RM_i$" relation is a compromise. The matching given for some transport channel rates can no longer be good for other rates since the binary error rate does not vary linearly as a function of the Eb/I ratio. It would be possible to define rate matching attributes $RM_{i,1}$ that depend on the transport channel i and the transport format 1 used for this transport channel.

It is also possible that matching of transport channels is not optimum, and in this case at least one rate matching attribute would have to be retransmitted to readjust it.

It is also possible to define gains $G_{i,1}$ for each transport channel i and for each transport format 1. However, the use of gains rather than rate matching attributes has the advantage that they can be updated relatively, in other words the receiver can request that a gain is increased or reduced with a certain step value, without needing to retransmit the new value of the gain, and therefore the quantity of data to be transmitted is smaller. The consequences will not be catastrophic if the command requiring an increase or a reduction is ignored. Only one transport channel is affected, and only slightly. Consequently, the command requiring an increase or a reduction of the gain does not need a very robust error correction coding. Finally, the instant at which the command is accepted by the transmitter is not very important either, since there is no need for the receiver to be synchronized on this instant.

Therefore, the invention has the substantial advantage that it uses a loop for adjusting the matching of the Eb/I ratio without affecting the multiplexing of transport channels from one iteration in the loop to the next, in other words without affecting either the order in which the transport channel symbols are transmitted, nor the manner in which the symbols of the different transport channels are combined with each other. This is not possible with rate matching since a change in the value of a rate matching attribute potentially affects rates after rate matching of all transport channels, and therefore also affects time multiplexing of transport channels. This is why every command requesting an adjustment to rate matching requires a robust error correction code for its transmission. Preferably, this type of adjustment is made by inputting new values of attributes rather than incremental correction values, and furthermore requires that the transmitter and the receiver are synchronized.

Other variant embodiments could be considered. It would be possible to include a step in which the spreading code signal is multiplied immediately before or immediately after step 510 in which gains $G_i$ specific to transport channels are multiplied. Furthermore, due to the fact that a multiplication is associative, it is also possible to carry out firstly the step 510 in which the different gains $G_i$ are multiplied by the spreading code signal, followed by the step in which the previous product result is multiplied by real amplitude samples chosen from the set comprising {-1, 0, 1}.

**Claims**

1. Method for matching at least two transport channels included within a composite channel, each of said at least two transport channels transmitting at least one data symbol (s),
   **characterized in that** it comprises a step in which the amplitude of each data symbol (s) to be transmitted is amplified by a gain (Gi) specific to the transport channel (i) from which said data symbol (s) originates.

2. Method according to claim 1, **characterized in that** said step in which the amplitude of each data symbol (s) to be transmitted is amplified comprises the following steps:

   - a step (144) in which one channel coefficient ($\Gamma_i$) is associated with each data symbol (s), the channel coefficient ($\Gamma_i$) associated with a data symbol (s) being on the one hand specific to the transport channel (i) from which said data symbol (s) originates, and on the other hand being representative of the gain (Gi) specific to this transport channel (i),

- a step (512) in which said associated channel coefficients ($\Gamma_i$) are converted into a gain in order to generate for each data symbol (s) said gain (Gi) specific to the transport channel (i) from which said data symbol (s) originates, and
- a step (510) in which the amplitude of each data symbol (s) is multiplied by said specific gain (Gi) generated from the associated channel coefficient ($\Gamma_i$).

3. Method according to claim 1, **characterized in that** said step in which the amplitude of each data symbol (s) to be transmitted is amplified comprises the following steps:

- a step (602) in which said at least one data symbol (s) of each transport channel is converted into a sample representative of said data symbol (s), and
- a step (610) in which said sample is multiplied by said gain (Gi) specific to said transport channel.

4. Method according to claim 2, **characterized in that** said step (144) in which a channel coefficient ($\Gamma_i$) is associated with each data symbol (s) consists of:

- encoding the value of said channel coefficient ($\Gamma_i$) and the value of the data symbol (s) concerned, and
- putting the coded value of said channel coefficient ($\Gamma_i$) and the coded value of said data symbol (s) concerned into respective fields within one and the same data element.

5. Method according to any of claims 1 to 4, **characterized in that** said gain (Gi) specific to each of said at least two transport channels (i) is constant over a period corresponding to the common period with which said at least two transport channels are grouped to form said composite channel.

6. Method according to any of claims 1 to 5, **characterized in that** said gain (Gi) specific to each of said at least two transport channels (i) is a real positive number (G).

7. Method according to any of claims 1 to 5, **characterized in that** said gain (Gi) specific to each of said at least two transport channels (i) is a vector ($\vec{G}$) representative particularly of a radiation direction, said vector ($\vec{G}$) resulting from the product of a real positive number ($\vec{G}$) and a normalized vector ($\vec{\Phi}$).

8. Method according to claim 7, **characterized in that** said vector ($\vec{G}$) constitutes a list of complex numbers including a fixed number of elements, each of said elements corresponding to one coordinate of said vector in a predetermined base.

9. Method according to any of the previous claims, in which said composite channel is transmitted from at least one transmitting station to at least one receiving station, **characterized in that** it comprises a step in which at least one gain specific to one of said at least two transport channels (i) is fed back using at least one piece of feedback information originating from said at least one receiving station.

10. Application of the matching method according to any of claims 4 to 9, each of which depending on claim 2, for the formation of a composite channel including at least two transport channels, said composite channel formation comprising a step (108) for encoding data symbols (s) of each of said at least two transport channels, a step (134) for multiplexing said at least two transport channels, said formation of the composite channel being followed by a step (142) in which said composite channel is mapped to at least one physical channel, **characterized in that** said step (144) in which a channel coefficient ($\Gamma_i$) is associated with each data symbol (s) to be transmitted is carried out after said encoding step (108) and before said multiplexing step (134), and **in that** said step (502) for converting each channel coefficient ($\Gamma_i$) into a gain (Gi) specific to the transport channel (i) from which the associated data symbol originates and said step (510) in which the amplitude of each data symbol (s) is multiplied by the gain (Gi) specific to the transport channel (i) from which said data symbol originates are carried out during said step (142) in which said composite channel is mapped to at least one physical channel.

11. Application of the matching method according to any of claims 4 to 9, each of which depending on claim 2, for the formation of a composite channel comprising at least two transport channels, said formation of the composite channel comprising a step (134) in which said at least two transport channels are multiplexed, said formation of the composite channel being followed by a step (142) in which said composite channel is mapped to at least one physical channel, **characterized in that** said step in which a channel coefficient ($\Gamma_i$) is associated with each data symbol (s) to be transmitted is carried out after said multiplexing step (134) and before said step (142) in which said composite channel is mapped to at least one physical channel, and **in that** said step (502) in which each channel coef-

ficient ($\Gamma_i$) is converted into a gain (Gi) specific to the transport channel (i) from which the associated data symbol originates and said step (510) in which the amplitude of each data symbol (s) is multiplied by the gain (Gi) specific to the transport channel (i) from which said data symbol originates are carried out during said step (142) in which said composite channel is mapped to at least one physical channel.

12. Application of the matching method according to claim 10 or 11, formation of said composite channel further comprising a step (116) for matching the rate in each of said at least two transport channels, said rate matching step (116) being such that the ratio between the number of data symbols after rate matching and the corresponding number of data symbols before rate matching, for one and the same transport channel, is approximately equal to a rate matching ratio ($RF_i$), said rate matching ratio ($RF_i$) being the result of the product of a rate matching attribute ($RM_i$) specific to the transport channel (i) considered and a factor (LF) independent of said transport channel considered (i), said rate matching attribute ($RM_i$) being chosen such that said transport channel (i) on reception has a sufficient ratio (Eb/I) of the average energy per coded data symbol (Eb) to the average energy of interference (I), **characterized in that,** the amplification of the amplitude of each data symbol (s) of a transport channel (i) by a gain (Gi) specific to this transport channel (i) contributing to modifying said ratio (Eb/I) of the average energy per coded data symbol to the average energy of interference, the value of said gain (Gi) is used to choose the value of said corresponding rate matching attribute ($RM_i$).

13. Application of the matching method according to claim 12, said composite channel being transmitted according to at least two transmission modes, namely a normal mode and at least one compressed mode, said at least one compressed mode implying that the transmission of said composite channel is only carried out on part of said at least one radio frame, for at least one radio frame, **characterized in that** first and second rate matching attributes ($RM_i$, $RM_i^{cm}$) with distinct values are selected respectively for said normal mode and for said at least one compressed mode, for at least one of said at least two transport channels (i).

14. Matching device for at least two transport channels included within a composite channel, each of said at least two transport channels transmitting at least one data symbol (s), **characterized in that** it comprises means for amplifying the amplitude of each data symbol (s) to be transmitted by a gain (Gi) specific to the transport channel (i) from which said data symbol (s) originates.

15. Base station for a telecommunication system comprising means for transmitting a composite channel comprising at least two transport channels, each (i) of said at least two transport channels transmitting at least one data symbol (s), **characterized in that** it comprises a device according to claim 14.

16. Base station according to claim 15, **characterized in that** it further comprises means for receiving at least one feedback information piece in order to slave said gain (Gi) specific to the transport channel from which said at least one data symbol (s) originates.

17. Device for generation of a composite channel comprising at least two transport channels, said generation device comprising means for encoding data symbols (s) for each of said at least two transport channels, means for multiplexing said at least two transport channels to form said composite channel and means for transmitting said composite channel on at least one physical channel, **characterized in that** it further comprises a device for matching said at least two transport channels according to claim 14.

18. Device according to claim 17, **characterized in that** said device for matching said at least two transport channels cooperates with said means for transmitting said composite channel on at least one physical channel.

19. Base station for a telecommunication system comprising means for transmitting a composite channel, said composite channel comprising at least two transport channels, each of said at least two transport channels transmitting at least one data symbol, **characterized in that** it comprises a device according to claim 17 or 18.

101

100

102A

104 — apply FCS

106 — Concatenation / segmentation into blocks to be coded

108 — Channel encoding

102B

116 — Rate matching

118 — 1$^{st}$ insertion of DTX symbols

120 — 1$^{st}$ interleaving

122 — segmentation by multiplexing frame

124 — Multiplexing of TrCHs

126 — 2$^{nd}$ insertion of DTX symbols

128 — segmentation into physical channels

130 — 2$^{nd}$ interleaving

132 — Mapping to physical channels

PhCH#1    PhCH#2    • • •

# FIG.1

| Put into line format | → | Spectrum preading | → | Radiofréquency modulation | → |
|---|---|---|---|---|---|

200     202     204

# FIG. 2

302    304    306    308

# FIG.3

**FIG.4**

**FIG.5**

$$s \xrightarrow{\quad} \{0,\delta,1\} \longrightarrow \boxed{\begin{array}{c} 0 \to 1 \\ \delta \to 0 \\ 1 \to -1 \end{array}} \longrightarrow \otimes \longrightarrow \{G_i, 0, -G_i\}$$

610

602

$G_i$

## FIG.6

## FIG.10

101
102A
104

100
102B

apply FCS

Concatenation / segmentation
into blocks to be coded

106

Channel encoding

108

Rate matching

116

1$^{st}$ insertion of DTX
symbols

118

1$^{st}$ interleaving

120

segmentation by multiplexing
frame

122

Associate a channel
coefficient with each symbol

144

• • •

Multiplexing of TrCHs

134

2nd insertion of DTX symbols

136

segmentation into physical channels

138

• • •

2$^{nd}$ interleaving

140

• • •

Mapping to physical channels

142

PhCH#1    PhCH#2    • • •

# FIG.7

| 7 | 6 | 5 | 4 | 3 | 2 | 1 | 0 |
|---|---|---|---|---|---|---|---|
| | | | $\Gamma$ | | | | s |

## FIG.8

## FIG.9

**European Patent Office**

## EUROPEAN SEARCH REPORT

Application Number

EP 01 46 0014

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | US 5 930 230 A (ODENWALDER JOSEPH P ET AL) 27 July 1999 (1999-07-27)<br><br>* abrégé *<br>* column 2, line 64 - column 3, line 46 *<br>* column 6, line 2 - line 30 *<br>* column 6, line 59 - column 7, line 15 *<br>* column 9, line 40 - line 65 *<br>* column 10, line 26 - line 39 *<br>* figures 3,4 *<br>---- | 1,2,4, 14,15, 17-19 | H04B7/005 H04B7/26 |
| A | EP 0 881 786 A (NOKIA MOBILE PHONES LTD) 2 December 1998 (1998-12-02)<br>* abrégé *<br>* column 3, line 2 - line 58 *<br>* column 6, line 26 - line 51 *<br>* column 9, line 56 - column 10, line 17 *<br>* figures 2,5,6 *<br>---- | 1,14 | |
| A | WO 99 03224 A (ERICSSON TELEFON AB L M) 21 January 1999 (1999-01-21)<br>* page 4, line 20 - page 5, line 2 *<br>* page 7, line 10 - line 16 *<br>* claims 1-3; figures 1-3 *<br>------ | 1,14 | TECHNICAL FIELDS SEARCHED (Int.Cl.7)<br><br>H04B<br>H04L<br>H04J |

The present search report has been drawn up for all claims

| Place of search | Date of completion of the search | Examiner |
|---|---|---|
| THE HAGUE | 19 September 2001 | Lõpez Márquez, T |

**ANNEX TO THE EUROPEAN SEARCH REPORT
ON EUROPEAN PATENT APPLICATION NO.**                    EP 01 46 0014

This annex lists the patent family members relating to the patent documents cited in the above—mentioned European search report.
The members are as contained in the European Patent Office EDP file on
The European Patent Office is in no way liable for these particulars which are merely given for the purpose of information.

19-09-2001

| Patent document cited in search report | | Publication date | Patent family member(s) | | Publication date |
|---|---|---|---|---|---|
| US 5930230 | A | 27-07-1999 | AU | 736358 B2 | 26-07-2001 |
| | | | AU | 3154697 A | 05-01-1998 |
| | | | BR | 9709612 A | 10-08-1999 |
| | | | CN | 1228211 A | 08-09-1999 |
| | | | EP | 0901722 A1 | 17-03-1999 |
| | | | JP | 2000511721 T | 05-09-2000 |
| | | | WO | 9745970 A1 | 04-12-1997 |
| EP 0881786 | A | 02-12-1998 | FI | 972278 A | 30-11-1998 |
| | | | BR | 9801707 A | 19-10-1999 |
| | | | DE | 19823504 A1 | 03-12-1998 |
| | | | EP | 0881786 A2 | 02-12-1998 |
| | | | GB | 2327833 A | 03-02-1999 |
| | | | JP | 10341188 A | 22-12-1998 |
| | | | US | 6266321 B1 | 24-07-2001 |
| WO 9903224 | A | 21-01-1999 | US | 6108369 A | 22-08-2000 |
| | | | AU | 8364098 A | 08-02-1999 |
| | | | BR | 9810998 A | 08-08-2000 |
| | | | CN | 1269933 T | 11-10-2000 |
| | | | EP | 0995284 A1 | 26-04-2000 |
| | | | WO | 9903224 A1 | 21-01-1999 |
| | | | TW | 387177 B | 11-04-2000 |
| | | | ZA | 9805930 A | 27-01-1999 |

EPO FORM P0459

For more details about this annex : see Official Journal of the European Patent Office, No. 12/82